# FASCICULE DE BREVET EUROPEEN

(11) **EP 0 818 339 B1**
(45) Date de publication et mention de la délivrance du brevet: **03.03.2010**
(21) Numéro de dépôt: 97401572.9
(22) Date de dépôt: 03.07.1997
(51) Int. Cl.: B60J 5/04, B62D 21/15

(54) **Porte à cadre structural pour véhicule automobile**
Kraftfahrzeugtür mit angeordneter Tragstruktur
Motor vehicle door provided with a structural frame

(30) Priorité: 09.07.1996 FR 9608540
(43) Date de publication de la demande: 14.01.1998
(73) Titulaire: RENAULT S.A.S., 92100 Boulogne Billancourt (FR); Ymos Aktiengesellschaft, 63857 Waldaschaff (DE)
(72) Inventeur: Lerooy, Francois J., 92420 Vaucresson (FR); Mathieu, Eric, 92700 Colombes (FR); Roue, Yves, 92000 Nanterre (FR); Rozman, Olivier, 78390 Bois d'Arcy (FR); Nau, Yves J.F., 40593 Düsseldorf (DE); Smolla, Dirk, 63879 Weibersbrunn (DE)

(56) Documents cités:
- DE-A- 19 540 029
- NL-A- 7 000 536

## Description

L'invention concerne une porte latérale de véhicule automobile possédant des caractéristiques de déformation améliorées en cas de choc frontal dudit véhicule.

On connaît principalement deux types de portes latérales pour véhicules automobile. Un premier type, dit « autoclave » est constitué d'un panneau extérieur monté sur un caisson intérieur qui assure la rigidité de la porte. Ce caisson intérieur reçoit dans sa partie inférieure le mécanisme de commande de la vitre alors que sa partie supérieure, en forme de cadre, porte les joints et procure le guidage de la vitre. Un second type, dit « à cadre », est constitué d'un caisson inférieur bas sur lequel est monté un panneau extérieur, un cadre aux dimensions de la porte venant se fixer sur l'ensemble ainsi constitué.

Dans ces deux types de portes, il est connu d'améliorer la tenue à la compression longitudinale résultant d'un choc frontal, au moyen d'une pièce séparée, appelée renfort de bandeau que l'on dispose en haut du médaillon de porte, entre la charnière haute de la porte et le pied milieu du véhicule. Un tel renfort de bandeau est conçu pour s'opposer au déplacement de la partie avant de la porte. Cette disposition induit un effort très important et lorsque le renfort cède, il ne travaille plus en compression pure mais en flambage. L'effort chute alors rapidement vers des valeurs en deçà des valeurs admissibles. Les zones de fléchissement n'étant pas maîtrisées, elles sont susceptibles d'affecter et de détériorer la porte et ses fonctions essentielles. On connaît des renforts de bandeau à déformation programmée, permettant de palier cet inconvénient. Néanmoins, le renfort de bandeau, reste, de par sa situation en haut du médaillon de porte, décalé par rapport à l'appui avant constitué par les deux charnières. Il s'ensuit une moindre résistance de la partie inférieure de la porte qui est dépourvue de bandeau et donc une mauvaise répartition des efforts.

WO 81/03467 décrit le préambule de la revendication 1.

La porte selon l'invention vise à palier cet inconvénient. A cet effet, l'invention concerne une porte latérale de véhicule automobile comportant un caisson constitué d'au moins une âme inférieure sensiblement horizontale reliant entre elles une aile antérieure sensiblement verticale portant les charnières de la porte et une aile postérieure sensiblement verticale portant la serrure, un cadre qui assure le guidage de la vitre de la porte et un panneau extérieur étant fixés respectivement à l'intérieur et à l'extérieur dudit caisson, ledit cadre étant fixé auxdites ailes antérieure et postérieure du caisson, caractérisée en ce que la liaison entre le cadre et l'aile antérieure est assurée par l'intermédiaire de moyens d'absorption d'énergie, disposés respectivement au niveau des appuis de charnières de la porte.

Selon une autre caractéristique de l'invention, les moyens d'absorption d'énergie sont tels que l'effort nécessaire à leur déformation reste inférieur à l'effort critique provoquant le flambage du cadre, et ce tout au long de ladite déformation. Cette caractéristique permet de préserver le plus longtemps possible l'intégrité du cadre et donc celle des fonctions essentielles de la porte.

Selon une autre caractéristique de l'invention, les moyens d'absorption d'énergie sont tels que l'effort nécessaire à leur déformation croît au fur et à mesure de ladite déformation. Cette caractéristique permet d'adapter la déformation à l'importance du choc.

Selon une autre caractéristique de l'invention, les moyens d'absorption d'énergie comportent au moins deux unités disposées respectivement au droit des appuis des charnières de la porte. Cette caractéristique permet de répartir au mieux les efforts transmis au cadre par l'intermédiaire des charnières.

Selon une autre caractéristique de l'invention, les éléments d'absorption d'énergie sont constitués par deux flasques reliés entre eux par des tubes. Cette caractéristique permet une réalisation simple et particulièrement bon marché.

Selon une autre caractéristique de l'invention, le cadre est constitué par un montant externe définissant le contour extérieur de la porte et procurant le guidage haut et le guidage latéral arrière de la vitre, les parties antérieure et postérieure dudit montant externe étant reliées entre elles par une barre inférieure et d'une barre supérieure, sensiblement horizontales, disposées respectivement aux niveaux du bas et du haut du panneau extérieur et d'une coulisse avant procurant le guidage de la vitre en partie avant et reliant entre elles lesdites barres. Cette caractéristique permet d'obtenir un cadre assurant le guidage de la vitre tout en procurant une bonne rigidité.

Selon une autre caractéristique de l'invention, le cadre comporte en outre une troisième barre, disposée entre la barre inférieure et la barre supérieure, ladite troisième barre étant fixée d'une part à l'arrière de ladite barre inférieure et d'autre part à la coulisse.

Selon une autre caractéristique de l'invention, des plaques de fixation d'un mécanisme de lève-vitre et d'une commande intérieure d'ouverture de porte sont fixées chacune respectivement à la barre supérieure et à la troisième barre. Ces caractéristiques permettent d'intégrer les fonctions de lève-vitre et de commande intérieure d'ouverture de porte tout en améliorant la rigidité du cadre.

Selon une autre caractéristique de l'invention, le montant externe, les barres et la coulisse constituant le cadre sont réalisés à partir de profilés en aluminium. Cette caractéristique permet un allégement notable de la porte.

La porte selon l'invention permet donc une optimisation de sa résistance grâce à un bonne répartition des contraintes. De plus, le montage des sous-ensembles tels que les lève-vitres, les commandes d'ouverture, s'effectuant sur le cadre, il peut être réalisé sur une chaîne de montage parallèle à la chaîne de montage principal. Enfin, la rigidité de la porte étant assurée uniquement par le cadre, on peut diminuer, à rigidité égale, le poids de la porte, car le cadre peut être réalisé à base de profilés en métal léger.

D'autres caractéristiques et avantages apparaîtront à la lecture de la description d'un exemple de dispositif selon l'invention, en référence aux dessins dans lesquels :
- la figure 1 est une vue en perspective éclatée de la porte selon l'invention,
- la figure 2 est une vue en perspective du cadre de la porte selon l'invention,
- la figure 3 est une section horizontale de la porte selon l'invention au niveau d'une des charnières,
- la figure 4 est une section horizontale de la porte selon l'invention au niveau du pied milieu du véhicule.

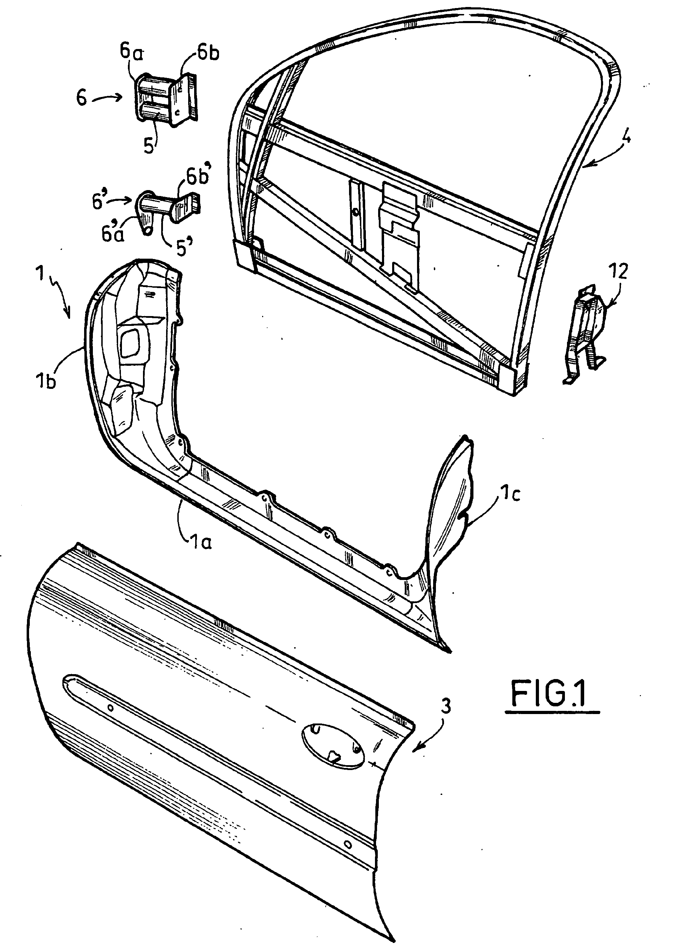

La porte latérale de véhicule automobile selon l'invention est représentée sur la figure 1. Elle est constituée principalement d'un caisson bas comportant une âme la inférieure horizontale reliant entre elles une aile verticale antérieure 1b portant les charnières 2 de la porte et une aile verticale postérieure 1c portant la serrure, d'un panneau extérieur 3 venant se fixer à l'extérieur dudit caisson 1 et d'un cadre 4. Le cadre 4 est destiné à procurer le guidage de la vitre de la porte, notamment lorsque ladite vitre est en position haute. Le cadre 4 est une pièce de structure, considérée comme indéformable sur une plage d'effort donné. Il est fixé respectivement à l'aile antérieure la et à l'aile postérieure 1b du caisson 1, par exemple par vissage. La liaison entre le cadre 4 et l'aile verticale antérieure 1b est assurée par l'intermédiaire de moyens d'absorption d'énergie. Ces moyens constituent le segment le plus faible de l'ensemble structural destiné à résister à l'effort induit par un choc frontal. Ils sont choisis de manière à ce que l'effort nécessaire à leur déformation reste inférieur à l'effort critique provoquant le flambage du cadre 4, et ce durant toute leur déformation. Ils constituent ainsi une zone tampon déformable liée aux charnières 2, zone qui assure la dissipation de l'effort de compression sans provoquer le flambage de la structure arrière de la porte constituée par le cadre 4, flambage qui entraîne une chute brutale de l'effort résistant.

De préférence, les moyens d'absorption d'énergie sont choisis de manière à ce que l'effort nécessaire à leur déformation croisse au fur et à mesure de leur déformation, tout en restant, bien évidemment, inférieur à la charge critique de flambage du cadre 4.

Selon une variante préférentielle, les moyens d'absorption d'énergie comportent au moins deux unités distinctes disposées respectivement au droit des appuis des charnières 2, ce qui permet de répartir les efforts transmis par les charnières 2 sur l'ensemble du cadre 4. Ceci procure un avantage important par rapport aux portes selon l'art antérieur dans lesquelles la transmission des efforts s'effectuait uniquement au niveau du bandeau de la porte. En effet, l'ensemble du cadre 4 participant à la rigidité de la porte, il est possible d'obtenir, à rigidité égale, une diminution sensible du poids car le cadre peut être réalisé par assemblage de profilés en matière légère comme de l'aluminium.

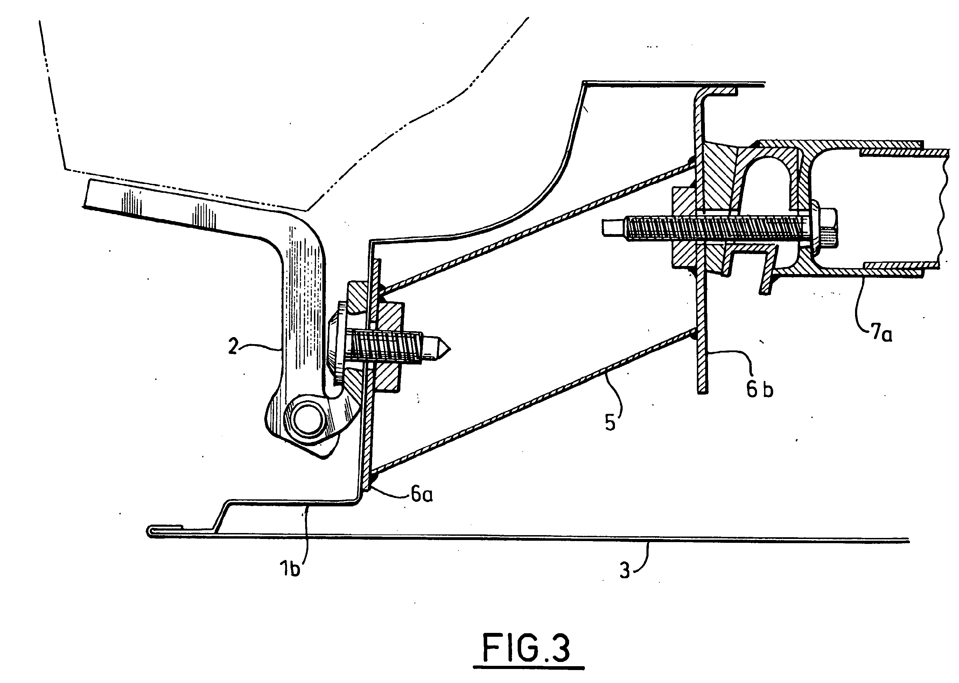

Selon la variante particulière représentée sur les figures, les éléments d'absorption d'énergie sont constitués par des tubes 5 soudés entre deux flasques 6a,6b. Ces éléments d'absorption d'énergie 6,6' s'interposent entre l'aile antérieure la du caisson 1 à laquelle est vissé le flasque 6a,6a' au droit des charnières 2 et le cadre 4, auquel est vissé le flasque 6b,6b' comme il est représenté sur la figure 3. Le réglage de l'effort d'enfoncement nécessaire à l'écrasement des tubes 5 est obtenu par une mise au point de leur épaisseur ou par adjonction d'affaiblissements périphériques tels que des trous circulaires, oblongs, des plis...

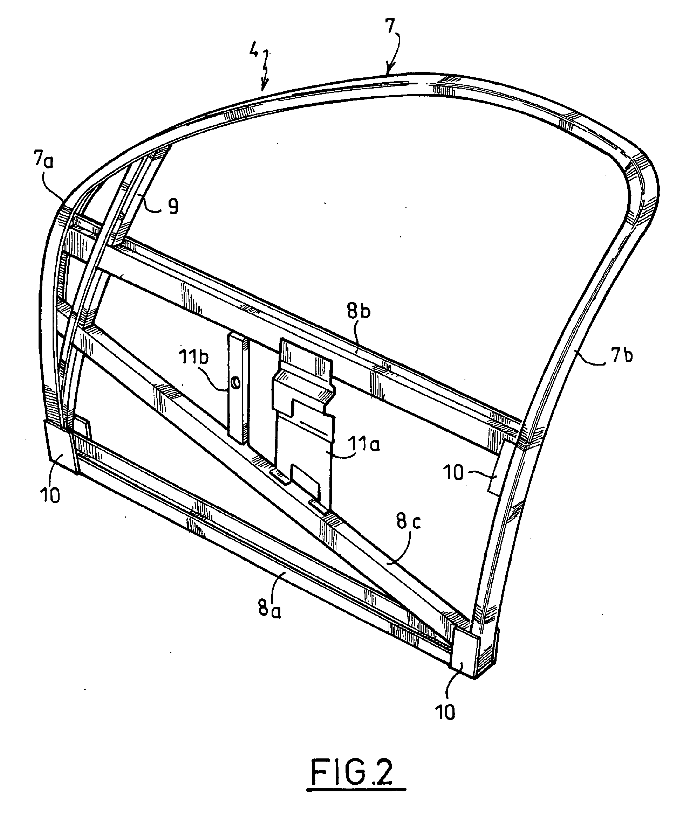

Le cadre 4 représenté sur la figure 2 est constitué par un montant externe 7 définissant le contour extérieur de la porte et procurant le guidage haut et le guidage latéral arrière de la vitre. Le cadre 4 comprend une barre inférieure 8a et une barre supérieure 8b, sensiblement horizontales, reliant les parties antérieure 7a et postérieure 7b du montant externe 7, respectivement aux niveaux du bas et du haut du panneau extérieur 3. Le cadre 4 comprend également une coulisse avant 9 procurant le guidage de la vitre en partie avant et reliant entre elles lesdites barres 8a,8b. Le cadre 4 comporte en outres une troisième barre 8c, disposée entre la barre inférieure 8a et la barre supérieure 8b, fixée respectivement à la partie arrière de ladite barre inférieure 8a et à la coulisse 9.

Le montant externe 7, les barres 8 et la coulisse 9 constituant le cadre 4 pourront, par exemple, être réalisés à partir de profilé en aluminium reliés entre eux par des pièces de liaison 10.

Selon la variante particulière représentée sur les figures, des plaques de fixation 11a,11b sont fixées chacune respectivement à la barre supérieure 8b et à la troisième barre 8c. Ces plaques 11a,11b sont destinées à recevoir le mécanisme de lève-vitre et de la commande intérieure d'ouverture de porte, non représentés sur les figures.

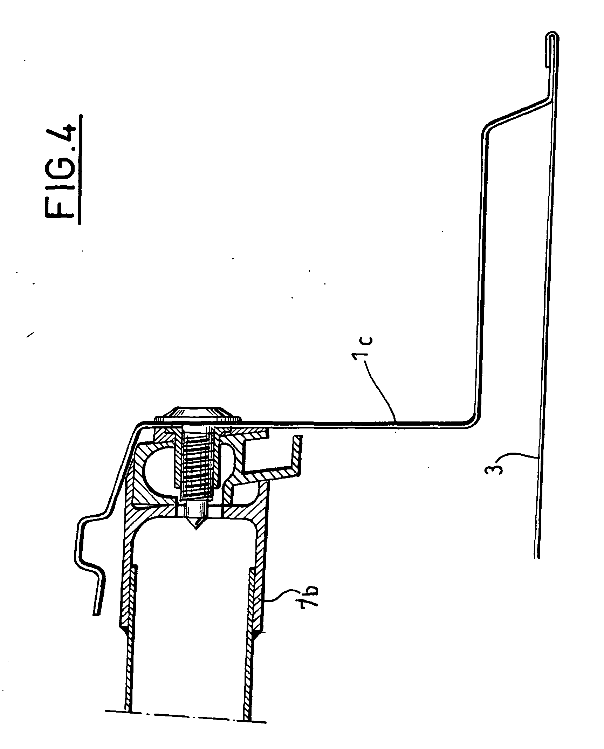

Le montage de la porte s'effectue de la manière suivante : sur le caisson 1, généralement en acier, sont assemblés le renfort de serrure 12 et les éléments d'absorption d'énergie 6,6'. Cet assemblage est réalisé par soudage par points. Le panneau extérieur 3 est serti sur le caisson 1. Les charnières 2 sont rapportées vissées sur les éléments d'absorption d'énergie 6,6' à travers l'aile antérieure 1b du caisson 1. La porte ainsi constituée peut être assemblée sur la caisse et passer dans cette configuration en cataphorèse. Ensuite, le cadre 4, généralement en aluminium, est vissé sur la porte comme il est représenté sur les figures 3 et 4, en chaîne de sellerie, le vissage étant réalisé par l'intérieur de la porte. Au préalable, le mécanisme de lève-vitre et la commande intérieure de porte auront été montés sur le cadre 4 par l'intermédiaire des plaques de fixation 11a,11b. L'assemblage du cadre 4 aura été, quant à lui, réalisé par soudage des barres 8 et de la coulisse 9 sur le montant externe 7 au moyen des pièces de liaison 10.

Bien entendu, l'invention n'est nullement limitée au mode de réalisation décrit et illustré qui n'a été donné qu'à titre d'exemple.

## Revendications

1. Porte latérale de véhicule automobile comportant un caisson (1) constitué d'au moins une âme (1a) inférieure sensiblement horizontale reliant entre elles une aile antérieure (1b) sensiblement verticale portant les charnières (2) de la porte et une aile postérieure (1c) sensiblement verticale portant la serrure, un cadre (4) qui assure le guidage de la vitre de la porte et un panneau extérieur (3) étant fixés respectivement à l'intérieur et à l'extérieur dudit caisson (1), ledit cadre (4) étant fixé auxdites ailes antérieure (1b) et postérieure (1c) du caisson (1), **caractérisée en ce que** la liaison entre le cadre (4) et l'aile antérieure (1b) est assurée par l'intermédiaire de moyens d'absorption d'énergie (6,6') disposés réespectivement au niveau des appuis de charnières (2) de la porte.

2. Porte latérale selon la revendication 1, **caractérisée en ce que** les moyens d'absorption d'énergie (6,6') sont tels que l'effort nécessaire à leur déformation reste inférieur à l'effort critique provoquant le flambage du cadre (4), et ce tout au long de ladite déformation.

3. Porte latérale selon l'une quelconque des revendications 1 ou 2, **caractérisée en ce que** les éléments d'absorption d'énergie sont constitués par deux flasques (6a,6b;6a',6b') reliés entre eux par des tubes (5,5').

4. Porte latérale selon l'une quelconque des revendications 1 à 3, **caractérisée en ce que** le cadre (4) est constitué par un montant externe (7) définissant le contour extérieur de la porte et procurant le guidage haut et le guidage latéral arrière de la vitre, les parties antérieure (7a) et postérieure (7b) dudit montant externe (7) étant reliées entre elles par une barre inférieure (8a) et d'une barre supérieure (8b), sensiblement horizontales, disposées respectivement aux niveaux du bas et du haut du panneau extérieur (3) et d'une coulisse avant (9) procurant le guidage de la vitre en partie avant et reliant entre elles lesdites barres (8a,8b).

5. Porte latérale selon la revendication 4, **caractérisée en ce que** le cadre (4) comporte en outre une troisième barre (8c), disposée entre la barre inférieure (8a) et la barre supérieure (8b), ladite troisième barre (8c) étant fixée d'une part à l'arrière de ladite barre inférieure (8a) et d'autre part à la coulisse (9).

6. Porte latérale selon l'une quelconque des revendications 4 ou 5, **caractérisée en ce que** le montant externe (7), les barres (8a,8b,8c) et la coulisse (9) constituant le cadre (4) sont réalisés à partir de profilés en aluminium.

7. Porte latérale selon l'une quelconque des revendications 5 ou 6, **caractérisée en ce que** des plaques de fixation (11a,11b) d'un mécanisme de lève-vitre et d'une commande intérieure d'ouverture de porte sont fixées chacune respectivement à la barre supérieure (8b) et à la troisième barre (8c).

## Claims

1. Side door of a motor vehicle comprising a box assembly (1) consisting of at least one substantially horizontal bottom web (1a) connecting together a substantially vertical front flange (1b) supporting the hinges (2) of the door and a substantially vertical rear flange (1c) supporting the lock, a frame (4) which guides the door window and an outer panel (3) being attached respectively to the inside and outside of the said box assembly (1), the said frame (4) being attached to the said front flange (1b) and rear flange (1c) of the box assembly (1), **characterized in that** the connection between the frame (4) and the front flange (1b) is provided by energy-absorbing means (6, 6') placed respectively at the bearing surfaces of door hinges (2).

2. Side door according to Claim 1, **characterized in that** the energy-absorbing means (6, 6') are such that the force necessary to deform them remains weaker than the critical force causing the frame (4) to buckle, and to do so all along the said deformation.

3. Side door according to either one of Claims 1 and 2, **characterized in that** the energy-absorbing elements consist of two end-plates (6a, 6b; 6a', 6b') connected together by tubes (5, 5').

4. Side door according to any one of Claims 1 to 3, **characterized in that** the frame (4) consists of an outer strut (7) defining the external contour of the door and providing the top guidance and the side rear guidance of the window, the front portion (7a) and rear portion (7b) of the said outer strut (7) being connected together by a bottom bar (8a) and a top bar (8b), that are substantially horizontal, placed respectively at the bottom and top of the external panel (3) and a front guide slot (9) guiding the window in the front portion and connecting the said bars (8a, 8b) together.

5. Side door according to Claim 4, **characterized in that** the frame (4) also comprises a third bar (8c) placed between the bottom bar (8a) and the top bar (8b), the said third bar (8c) being attached on the one hand to the rear of the said bottom bar (8a) and on the other hand to the guide slot (9).

6. Side door according to either one of Claims 4 and 5, **characterized in that** the outer strut (7), the bars (8a, 8b, 8c) and the guide slot (9) forming the frame (4) are made from aluminium section pieces.

7. Side door according to either one of Claims 5 and 6, **characterized in that** the fastening plates (11a, 11b) of a window-regulator mechanism and of an internal door-opening control are each attached respectively to the top bar (8b) and to the third bar (8c).

## Patentansprüche

1. Seitentür für ein Kraftfahrzeug, umfassend ein Gehäuse (1), das aus mindestens einem im Wesentlichen horizontalen unteren Mittelteil (1a) besteht, das einen im Wesentlichen vertikalen Frontflügel (1b), der Scharniere (2) der Tür trägt, und einen im Wesentlichen vertikalen Heckflügel (1c), der das Schloss trägt, miteinander verbindet, einen Rahmen (4), der die Führung des Türfensters gewährleistet, und eine Außenhaut (3), die an der Innenseite bzw. an der Außenseite des Gehäuses (1) befestigt sind, wobei der Rahmen (4) an dem Frontflügel (1b) und an dem Heckflügel (1c) des Gehäuses (1) befestigt ist, **dadurch gekennzeichnet, dass** die Verbindung zwischen dem Rahmen (4) und dem Frontflügel (1b) mittels Energieabsorptionsmitteln (6, 6') gewährleistet wird, die jeweils an den Stützen der Türscharniere (2) angeordnet sind.

2. Seitentür nach Anspruch 1, **dadurch gekennzeichnet, dass** die Energieabsorptionsmittel (6, 6') derart sind, dass die zu ihrer Verformung erforderliche Kraft unter einer kritischen Kraft bleibt, die ein Ausknicken des Rahmens (4) bewirkt, und zwar während der ganzen Verformung.

3. Seitentür nach Anspruch 1 oder 2, **dadurch gekennzeichnet, dass** die Energieabsorptionselemente aus zwei Flanschen (6a, 6b; 6a', 6b') bestehen, die durch Rohre (5, 5') miteinander verbunden sind.

4. Seitentür nach einem der Ansprüche 1 bis 3, **dadurch gekennzeichnet, dass** der Rahmen (4) aus einem äußeren Holm (7) besteht, der die Außenkontur der Tür definiert und die Oberführung und die hintere Seitenführung des Fensters bereitstellt, wobei der Frontteil (7a) und der Heckteil (7b) des äußeren Holms (7) durch eine untere Stange (8a) und eine obere Stange (8b) miteinander verbunden sind, die im Wesentlichen horizontal sind und unten bzw. oben an der Außenhaut (3) und an einer vorderen Führungsschiene (9) angeordnet sind, die die Führung des Fensters im Vorderteil bereitstellt und die Stangen (8a, 8b) miteinander verbindet.

5. Seitentür nach Anspruch 4, **dadurch gekennzeichnet, dass** der Rahmen (4) des Weiteren eine dritte Stange (8c) aufweist, die zwischen der unteren Stange (8a) und der oberen Stange (8b) angeordnet ist, wobei die dritte Stange (8c) einerseits am hinteren Teil der unteren Stange (8a) und andererseits an der Führungsschiene (9) befestigt ist.

6. Seitentür nach Anspruch 4 oder 5, **dadurch gekennzeichnet, dass** der äußere Holm (7), die Stangen (8a, 8b, 8c) und die Führungsschiene (9), die den Rahmen (4) bilden, aus Aluminiumprofilen hergestellt sind.

7. Seitentür nach Anspruch 5 oder 6, **dadurch gekennzeichnet, dass** Befestigungsplatten (11a, 11b) eines Fensterhebemechanismus einer inneren Betätigungsvorrichtung zum Öffnen der Tür jeweils an der oberen Stange (8b) und an der dritten Stange (8c) befestigt sind.
